# EUROPÄISCHE PATENTANMELDUNG

(11) **EP 4 850 511 A1**
(43) Veröffentlichungstag der Anmeldung: **09.12.2026**
(21) Anmeldenummer: 26172528.7
(22) Anmeldetag: 15.04.2026
(51) Int. Cl.: A01B 59/042

(54) **LANDWIRTSCHAFTLICHES ANBAUGERÄT MIT STÜTZELEMENTEN**

(30) Priorität: 06.06.2025 DE 202025103192 U
(71) Anmelder: RAUCH Landmaschinenfabrik GmbH, 77836 Rheinmünster (DE)
(72) Erfinder: Muckensturm, Romain, 67310 Flexbourg (FR); Herberg, Michael, 76547 Sinzheim (DE); Zeitvogel, Thomas, 77836 Rheinmüster (DE)
(74) Vertreter: Lichti - Patentanwälte Partnerschaft mbB

(57) **Zusammenfassung**

Es wird ein landwirtschaftliches Anbaugerät vorgeschlagen, welches einen Rahmen mit einer Mehrzahl von an dessen Unterseite mit Abstand voneinander angeordneten Stützelementen umfasst, welche zur Abstützung des Anbaugerätes auf dem Boden ausgebildet sind. Das Anbaugerät ist ferner mit einer Kopplungseinrichtung ausgestattet, welche zur Kopplung mit einer hierzu komplementären Kopplungsvorrichtung einer Zugmaschine ausgebildet ist, um das Anbaugerät mit der Zugmaschine zu verbinden. Die Erfindung sieht vor, dass zumindest zwei im Bereich der der Kopplungseinrichtung zugewandten Seite des Rahmens angeordnete, verstellbare Stützelemente derart zwischen einer Stützposition und einer Ruheposition verstellbar sind, dass der Rahmen sich in einer Schrägstellung bezüglich der Horizontalen befindet, wenn er von den in ihrer Stützposition befindlichen, verstellbaren Stützelementen abgestützt ist. In Ihrer Ruheposition können sich die verstellbaren Stützelemente insbesondere außer Kontakt mit dem Boden befinden, wenn das Anbaugerät auf dem Boden abgestellt worden ist.

## Beschreibung

Die Erfindung betrifft ein landwirtschaftliches Anbaugerät mit einem Rahmen mit einer Mehrzahl von an dessen Unterseite mit Abstand voneinander angeordneten Stützelementen, welche zur Abstützung des Anbaugerätes auf dem Boden ausgebildet sind, und mit einer Kopplungseinrichtung, welche zur Kopplung mit einer hierzu komplementären Kopplungsvorrichtung einer Zugmaschine ausgebildet ist, um das Anbaugerät mit der Zugmaschine zu verbinden.

Landwirtschaftliche Geräte sind in vielfältiger Ausgestaltung bekannt. Sie können in schwerer Bauart auf einen achsgestützten Nachläufer oder Selbstfahrer aufgesetzt oder in leichterer Bauart als Anbaugeräte konzipiert sein, wobei sie in letztgenanntem Fall mit einer Kopplungseinrichtung ausgestattet sind, welche zur Kopplung mit einer hierzu komplementären Kopplungsvorrichtung einer Zugmaschine, wie insbesondere eines Traktors, ausgebildet ist, um das Anbaugerät mit der Zugmaschine zu verbinden. Die Kopplungsvorrichtung der Zugmaschine ist in aller Regel von einem genormten Dreipunkt-Kraftheber mit zwei Unterlenkern und einem Oberlenker gebildet, an deren Enden jeweils ein Kopplungspunkt, z.B. in Form je einer Kugelhülse, für die hierzu komplementäre Kopplungseinrichtung des landwirtschaftlichen Anbaugerätes ausgebildet ist. Der Rahmen von landwirtschaftlichen Anbaugeräten ist üblicherweise an seiner Unterseite mit Stützelementen zum Abstellen des landwirtschaftlichen Anbaugerätes auf dem Boden ausgestattet, welche nach Art von Stützfüßen oder Stützrollen ausgestaltet und zweckmäßigerweise im Bereich der Ecken des Anbaugerätes angeordnet sein können.

Als in handhabungstechnischer Hinsicht mühsam erweist sich bei landwirtschaftlichen Anbaugeräten häufig einerseits deren lösbare Befestigung an der Zugmaschine, wie eines Traktors, indem die Kopplungseinrichtung des Anbaugerätes mit dem Dreipunkt-Kraftheber der Kopplungsvorrichtung der Zugmaschine gekoppelt werden muss, so dass letztere das Anbaugerät aufzunehmen vermag. Hierzu muss die Zugmaschine zunächst so nahe an das auf dem Boden abgestellte Anbaugerät heranfahren, dass letzteres an seine Stromversorgung und gegebenenfalls an seine rückwärtige Zapfwelle angeschlossen werden kann. Sodann werden die Unterlenker des Dreipunkt-Krafthebers derart ausgerichtet, dass sie mit den hierzu komplementären Verbindungspunkten der Kopplungseinrichtung des Anbaugerätes, welche beispielsweise in Form von Haken ausgestaltet sein können, fluchten. Anschließend muss die Zugmaschine rückwärts so nahe an das nach wie vor auf dem Boden abgestellte Anbaugerät herangefahren werden, dass die Unterlenker des Dreipunkt-Krafthebers der Kopplungsvorrichtung der Zugmaschine mit den hierzu komplementären Haken der Kopplungseinrichtung des Anbaugerätes gekoppelt werden können, wonach der Oberlenker des Dreipunkt-Krafthebers der Zugmaschine mit dem hierzu komplementären Verbindungspunkt der Kopplungseinrichtung des Anbaugerätes, welcher z.B. gleichfalls in Form eines Haken ausgestaltet sein kann, gekoppelt wird.

Um die Ausrichtung des landwirtschaftlichen Anbaugerätes in Bezug auf die Zugmaschine während des Ankoppelns sowie insbesondere auch die Überführung des landwirtschaftlichen Anbaugerätes an einen Ort, an welchem es mit der Zugmaschine gekoppelt werden kann, zu erleichtern, kann der Rahmen des landwirtschaftlichen Anbaugerätes mit Stützelementen in Form von Stützrollen ausgestattet sein, welche üblicherweise im Bereich der Ecken des Rahmens an diesem gelagert sind. Die DE 20 2023 103 588 U1 beschreibt ein solches landwirtschaftliches Anbaugerät, dessen Stützrollen mit Antriebsmotoren versehen sind, um eine Verlagerung des auf den Stützrollen gelagerten Anbaugerätes anlässlich des Ankoppelns an die Zugmaschine oder auch z.B. innerhalb eines landwirtschaftlichen Betriebs zu vereinfachen. Auf diese Weise wird das Ankoppeln des Anbaugerätes an die Zugmaschine insbesondere im Hinblick darauf, dass beispielsweise als Anbaugeräte konzipierte landwirtschaftliche Verteilmaschinen, an deren Rahmen ein Vorratsbehälter zur Bevorratung des Verteilgutes, wie in Form von pulver- oder partikelförmigen Verteilgütern, z.B. Mineraldünger, Saatgut und dergleichen, oder in Form von flüssigen Verteilgütern, wie Pflanzenschutzmitteln, Flüssigdünger und dergleichen, montiert ist, ein erhebliches Gewicht von mehreren Tonnen besitzen können, wobei solche Anbaugeräte z.B. in Form von Zentrifugaldüngerstreuern, pneumatischen Verteilmaschinen, wie z.B. Pneumatikdüngerstreuern, Sämaschinen, Drillmaschinen etc., Feldspritzen oder dergleichen ausgestaltet sein können.

Der DE 36 24 751 A1 ist ein weiteres landwirtschaftliches Anbaugerät in Form eines Düngerstreuers zu entnehmen, welches einerseits zwei von verlängerten Rahmenteilen gebildete Stützfüße, andererseits zwei an dem Rahmen verschraubte Stützrollen aufweist, um das Anbaugerät durch Anheben an seiner mit den Stützfüßen versehenen Seite mittels der Stützrollen verlagern zu können.

Aus der EP 2 532 219 A1 ist ein weiteres landwirtschaftliches Anbaugerät bekannt, welches in Form von Stützrollen ausgestaltete Stützelemente aufweist, welche zwischen einer Stützposition und einer Ruheposition verschwenkbar sind. Auf diese Weise lassen sich einerseits z.B. Beschädigungen einer zu bewirtschaftenden landwirtschaftlichen Fläche, welche in der Regel einen sehr unebenen, unbefestigten und häufig feuchten und tiefen Boden aufweist, aufgrund die Stützrollen durch Verschwenken der Stützrollen in ihre Ruheposition verhindern; andererseits kann auf diese Weise eine übermäßige Verschmutzung der Stützrollen durch anhaftende Erdklumpen etc. vermieden werden, welche andernfalls anlässlich eines Transportes des Anbaugerätes über öffentliche Straßen zuvor entfernt werden müssten.

Allerdings erweist sich der bekannte Schwenkmechanismus der Stützrollen sowohl in konstruktiver als auch in handhabungstechnischer Hinsicht als aufwändig und gestaltet sich das Ankoppeln von landwirtschaftlichen Anbaugeräten an eine Zugmaschine auch insoweit als mühsam, als das anlässlich des Ankoppelns an die Zugmaschine mittels seiner Stützelemente auf dem Boden abgestellte Anbaugerät in der Regel sehr wenig Raum für eine Bedienperson zwischen der Zugmaschine und dem Anbaugerät bietet, was den Ankopplungsvorgang zusätzlich erschwert.

Der Erfindung liegt die Aufgabe zugrunde, ein landwirtschaftliches Anbaugerät der eingangs genannten Art auf einfache und kostengünstige Weise dahingehend weiterzubilden, dass unter zumindest weitestgehender Vermeidung der vorgenannten Nachteile eine vereinfachte Handhabung des Anbaugerätes, insbesondere anlässlich des An- und Ankoppelns desselben an eine bzw. von einer Zugmaschine, gewährleistet ist.

Erfindungsgemäß wird diese Aufgabe bei einem landwirtschaftlichen Anbaugerät der eingangs genannten Art dadurch gelöst, dass zumindest zwei im Bereich der der Kopplungseinrichtung zugewandten Seite des Rahmens angeordnete, verstellbare Stützelemente derart zwischen einer Stützposition und einer Ruheposition verstellbar sind, dass der Rahmen sich in einer Schrägstellung bezüglich der Horizontalen befindet, wenn er von den in ihrer Stützposition befindlichen, verstellbaren Stützelementen abgestützt ist.

Die erfindungsgemäße Ausgestaltung bietet aufgrund der Schrägstellung des landwirtschaftlichen Anbaugerätes gegenüber einer Horizontalebene, wenn seine verstellbaren Stützelemente in ihre Stützposition zur Abstützung des Anbaugerätes auf dem Boden überführt worden sind, eine bessere Zugänglichkeit der Kopplungseinrichtung seitens eines Bedieners insbesondere dann, wenn das Anbaugerät an eine Zugmaschine angekoppelt werden soll, so dass seine Handhabung vereinfacht wird. Aufgrund der Verstellbarkeit der Stützelemente zwischen ihrer Stützposition, in welcher sie das auf dem Boden abgestellte Anbaugerät abstützen, und ihrer Ruheposition, lassen sich ferner Beschädigungen landwirtschaftlicher Flächen durch die Stützelemente des Anbaugerätes ebenso verhindern wie eine starke Verschmutzung der Stützelemente durch anhaftende Erdklumpen und andere Bodenbestandteile, Pflanzenreste oder dergleichen.

Die verstellbaren Stützelemente des Anbaugerätes befinden sich in ihrer Ruheposition vorzugsweise im Wesentlichen gänzlich außer Kontakt mit dem Boden, wenn das Anbaugerät auf dem Boden abgestellt worden ist, so dass eine Verstellbarkeit der Stützelemente zwischen ihrer Stützposition, in welcher sie das auf dem Boden abgestellte Anbaugerät abstützen, und ihrer Ruheposition, in welcher sie sich außer Kontakt mit dem Boden befinden, gegeben ist.

Um für eine gute Zugänglichkeit der Kopplungseinrichtung des Anbaugerätes zu sorgen, ist der Rahmen desselben vorzugsweise derart in Bezug auf die Horizontale geneigt, dass seine der Kopplungseinrichtung zugewandte Seite gegenüber seiner der Kopplungseinrichtung entgegengesetzten Seite angehoben ist, wenn er von den in ihrer Stützposition befindlichen, verstellbaren Stützelementen abgestützt ist. Die Kopplungseinrichtung erstreckt sich folglich unter einem gewissen Winkel schräg nach oben, wenn die verstellbaren Stützelemente in ihre Stützposition überführt worden sind.

Was die Schrägstellung des Anbaugerätes betrifft, wenn sich die verstellbaren Stützelemente in ihrer Stützposition befinden, so kann es sich als zweckmäßig erweisen, dass der Rahmen des Anbaugerätes um einen Winkel zwischen etwa 1° und etwa 15°, insbesondere zwischen etwa 1,5° und etwa 12,5°, vorzugsweise zwischen etwa 2° und etwa 10°, z.B. zwischen etwa 2,5° und etwa 8°, in Bezug auf die Horizontale geneigt ist, wenn er von den in ihrer Stützposition befindlichen, verstellbaren Stützelementen abgestützt ist.

Während grundsätzlich alle Stützelemente des erfindungsgemäßen Anbaugerätes verstellbar sein können, erweist es sich in den meisten Fällen aus wirtschaftlichen und handhandhabungstechnischen Gründen als vorteilhaft, wenn zumindest zwei im Bereich der der Kopplungseinrichtung entgegengesetzten Seite des Rahmens angeordnete Stützelemente starr, also nicht zwischen einer Stütz- und einer Ruheposition verstellbar, an dem Rahmen angeordnet sind. Der seitliche Abstand (senkrecht zur Fahrtrichtung) der starren Stützelemente kann hierbei vorzugsweise derart bemessen sein, dass er etwa dem Radabstand einer für landwirtschaftliche Zwecke vorgesehenen Zugmaschine, wie eines Traktors, entspricht, so dass beim Abstellen des Anbaugerätes auf einem Feld der Boden nur dort durch die starren Stützelemente beeinträchtigt bzw. komprimiert wird, wo sich ohnehin die Fahrspuren der Zugmaschine befinden.

Im Hinblick auf eine hohe Robustheit und Bedienerfreundlichkeit können die zumindest zwei im Bereich der der Kopplungseinrichtung zugewandten Seite des Rahmens angeordneten, verstellbaren Stützelemente vorzugsweise zwischen ihrer Stützposition und ihrer Ruheposition verschwenkbar sein.

In konstruktiver Hinsicht in diesem Zusammenhang in vorteilhafter Ausgestaltung vorgesehen sein, dass die zumindest zwei im Bereich der der Kopplungseinrichtung zugewandten Seite des Rahmens angeordneten, verstellbaren Stützelemente mittels je eines Hebelgestänges zwischen ihrer Stützposition und ihrer Ruheposition verschwenkbar sind.

Das Hebelgestänge eines jeweiligen verstellbaren Stützelementes kann hierbei vorzugsweise in Richtung der Ruheposition des jeweiligen verstellbaren Stützelementes mechanisch, insbesondere elastisch, vorbelastet sein, um das jeweilige Stützelement in seiner Ruheposition zu halten, so dass ein jeweiliges verstellbares Stützelement mittels seines Hebelgestänges eigenständig in der Ruheposition gehalten ist, wohingegen es entgegen der mechanischen Vorbelastung in die Stützposition verschwenkt werden kann.

Zur einfachen und bequemen Verstellung der Stützelemente von ihrer Ruheposition in ihre Stützposition kann das Hebelgestänge vorteilhafterweise ein erstes Betätigungselement aufweisen, um das Hebelgestänge durch Betätigen des ersten Betätigungselementes von der Ruheposition in die Stützposition des jeweiligen verstellbaren Stützelementes zu überführen, was - wie oben erwähnt - im Falle einer mechanischen bzw. elastischen Vorbelastung des Hebelgestänges in die Ruheposition eines jeweiligen Stützelementes insbesondere entgegen dieser mechanischen Vorbelastung geschehen kann.

Zur einfachen und bequemen Verstellung der Stützelemente von ihrer Stützposition in ihre Ruheposition kann das Hebelgestänge eines jeweiligen Stützelementes ferner vorteilhafterweise eine mechanische Verriegelung aufweisen, um das jeweilige Stützelement in seiner Stützposition mechanisch zu arretieren, so dass ein jeweiliges verstellbares Stützelement mittels seines Hebelgestänges eigenständig in der Stützposition gehalten bzw. blockiert ist, wohingegen es nach Entriegeln der mechanischen Verriegelung in die Ruheposition verschwenkt werden kann.

Zur einfachen und bequemen Verstellung der Stützelemente von ihrer Stützposition in ihre Ruheposition kann das Hebelgestänge vorteilhafterweise ein zweites Betätigungselement aufweisen, um das Hebelgestänge durch Betätigen des zweiten Betätigungselementes zu entriegeln und von der Stützposition in die Ruheposition des jeweiligen verstellbaren Stützelementes zu überführen.

In vorteilhafter Ausgestaltung kann weiterhin vorgesehen sein, dass das Hebelgestänge entlang einer Führung zwischen der Ruheposition und der Stützposition des jeweiligen verstellbaren Stützelementes verschwenkbar ist, so dass sich bei einer hohen Robustheit eines jeweiligen Hebelgestänges ein geführter Verstellweg ergibt, wenn ein jeweiliges Stützelement mittels seines Hebelgestänges zwischen seiner Ruhe- und seiner Stützposition verschwenkt wird.

Gemäß einer in konstruktiver Hinsicht besonders robusten sowie einfach und bequem bedienbaren Ausgestaltung des Hebelgestänges eines jeweiligen Stützelementes kann vorteilhafterweise vorgesehen sein, dass das Hebelgestänge
- einen oberen Hebelarm aufweist, welcher an seinem einen, dem Rahmen nahen Ende um eine erste, im Wesentlichen horizontale Schwenkachse an dem Rahmen des Anbaugerätes schwenkbar gelagert ist;
- einen unteren Hebelarm aufweist, welcher an seinem einen, dem Rahmen nahen Ende um eine zweite, im Wesentlichen horizontale und zu der ersten Schwenkachse parallele Schwenkachse an dem Rahmen des Anbaugerätes schwenkbar gelagert ist;
- eine ein jeweiliges Stützelement tragende Konsole aufweist, welche einerseits um eine dritte, im Wesentlichen horizontale Schwenkachse an dem anderen, dem Rahmen fernen Ende des oberen Hebelarms schwenkbar gelagert ist, und welche andererseits um eine vierte, im Wesentlichen horizontale und zu der dritten Schwenkachse parallele Schwenkachse an dem anderen, dem Rahmen fernen Ende des unteren Hebelarms schwenkbar gelagert ist; und
- einen Führungsarm aufweist, welcher an seinem einen, dem Rahmen nahen Ende seinerseits um die zweite Schwenkachse des unteren Hebelarms, aber unabhängig von diesem an dem Rahmen des Anbaugerätes schwenkbar gelagert ist, und welcher an seinem anderen, dem Rahmen fernen Ende ein Führungslangloch aufweist, welches von der dritten Schwenkachse des oberen Hebelarms durchsetzt ist und entlang welchem die dritte Schwenkachse verlagerbar ist, wenn das Hebelgestänge zwischen der Ruheposition und der Stützposition des jeweiligen verstellbaren Stützelementes verschwenkt wird.

Auf diese Weise bilden einerseits der obere Hebelarm und der untere Hebelarm mit der Konsole ein stabiles "Parallelogramm" mit hoher Steifigkeit, andererseits bildet der zum Einen mit der zweiten (unteren) Schwenkachse des unteren Hebelarms, zum Anderen mit der dritten (oberen) Schwenkachse des oberen Hebelarms zusammenwirkende Führungsarm, entlang dessen Führungslangloches die dritte (obere) Schwenkachse des oberen Hebelarms und somit das gesamte Hebelgestänge geführt ist, eine wirksame Führung des Hebelgestänges zwischen der Ruhe- und Stützposition eines jeweiligen Stützelementes.

Darüber hinaus bietet ein solchermaßen ausgestaltetes Hebelgestänge den Vorteil, dass ein jeweiliges verstellbares Stützelement dadurch mechanisch in seine Ruheposition vorbelastet sein kann, indem zwischen der ersten Schwenkachse des oberen Hebelarms und der vierten Schwenkachse des unteren Hebelarms wenigstens eine erste Feder, z.B. in Form einer Schraubenfeder, Fluidfeder oder dergleichen, wirksam ist. Erstrecken sich der obere und untere Hebelarm demnach in der Stützposition des Stützelementes schräg nach unten, so ist die erste Feder gespannt und belastet das Hebelgestänge nach oben in Richtung der Ruheposition, in welcher der obere und untere Hebelarm demgegenüber angehoben und die erste Feder demgegenüber verkürzt ist, um das Hebelgestänge in der Ruheposition des Stützelementes zu halten.

Darüber hinaus bietet ein solchermaßen ausgestaltetes Hebelgestänge den Vorteil, dass die mechanische Verriegelung eines jeweiligen verstellbaren Stützelementes in seiner Stützposition ein abgewinkeltes Ende des Führungslangloches des Führungsarms des Hebelgestänges umfassen kann, in welches die dritte (obere) Schwenkachse des oberen Hebelarms in Eingriff bringbar ist, so dass die dritte Schwenkachse in der Stützposition in dem abgewinkelten Ende des Führungslangloches im Eingriff steht und das Hebelgestänge blockiert.

Die mechanische Verriegelung eines jeweiligen verstellbaren Stützelementes in seiner Stützposition kann in diesem Fall zweckmäßigerweise ferner wenigstens eine zwischen der ersten (oberen) Schwenkachse des oberen Hebelarms und dem Führungsarm wirksame zweite Feder umfassen, um die dritte (obere) Schwenkachse des oberen Hebelarms mechanisch bzw. elastisch in die Eingriffsposition in das abgewinkelte Ende des Führungslangloches vorzubelasten und auf diese Weise für eine wirksame mechanische Verriegelung des Hebelgestänges in der Stützposition eines jeweiligen Stützelementes zu sorgen, wobei die Verriegelung zum Verschwenken des Stützelementes von seiner Stützposition in seine Ruheposition zunächst entriegelt werden muss, indem die dritte Schwenkachse des oberen Hebelarms entgegen der Federkraft der zweiten Feder außer Eingriff mit dem abgewinkelten Ende des Führungslangloches gebracht wird.

In Bezug auf das erste Betätigungselement des Hebegestänges kann vorteilhafterweise vorgesehen sein, dass das erste Betätigungselement des Hebelgestänges einen, insbesondere nach Art eines ersten Fußgriffes ausgestalteten, Fortsatz des freien Endes des Führungsarms des Hebelgestänge umfasst, wobei sich der Fortsatz des Führungsarms mit einer zu dem oberen Hebelarm, dem unteren Hebelarm und dem Führungsarm parallelen Erstreckungsrichtungskomponente erstreckt, so dass beim Betätigen des ersten Betätigungselementes, indem z.B. ein Benutzer dessen ersten Fußgriff nach unten tritt, der obere und der untere Hebelarm des Hebelgestänges um ihre erste bzw. zweite, dem Rahmen des Anbaugerätes nahe Schwenkachse nach unten verschwenkt und die dritte (obere) Schwenkachse des oberen Hebelarms dabei von der Ruheposition entlang dem Führungslangloch des Führungsarms bewegt werden, bis das Hebelgestänge in die Stützposition des jeweiligen Stützelementes verschwenkt worden ist.

Alternativ oder insbesondere zusätzlich kann in Bezug auf das zweite Betätigungselement des Hebelgestänges vorteilhafterweise vorgesehen sein, dass das zweite Betätigungselement des Hebelgestänges einen, insbesondere nach Art eines zweiten Fußgriffes ausgestalteten, Fortsatz der ein jeweiliges Stützelement tragenden Konsole umfasst, wobei sich der Fortsatz der Konsole von dem unteren Ende der Konsole mit einer zu dem oberen Hebelarm, dem unteren Hebelarm und dem Führungsarm parallelen Erstreckungsrichtungskomponente erstreckt, so dass beim Betätigen des zweiten Betätigungselementes, indem z.B. ein Benutzer dessen zweiten Fußgriff nach unten tritt, der obere und der untere Hebelarm des Hebelgestänges um ihre erste bzw. zweite, dem Rahmen des Anbaugerätes nahe Schwenkachse nach oben verschwenkt und die dritte (obere) Schwenkachse des oberen Hebelarms dabei von der Stützposition entlang dem Führungslangloch des Führungsarms bewegt werden, bis das Hebelgestänge in die Ruheposition des jeweiligen Stützelementes verschwenkt worden ist.

Die - erste, zweite, dritte und vierte - Schwenkachsen eines jeweiligen Hebelgestänges können vorzugsweise im Wesentlichen parallel zur Fahrtrichtung des Anbaugerätes angeordnet sein, so dass sich ein jeweiliges Hebelgestänge im Wesentlichen senkrecht zur Fahrtrichtung erstreckt, was die Möglichkeit bietet, ein jeweiliges Hebelgestänge am Rahmen des Anbaugerätes, z.B. unterhalb eines Vorratsbehälters zur Aufnahme von Verteilgut und/oder - im Falle eines Anbaugerätes in Form eines Zentrifugalstreuers - zwischen der Kopplungseinrichtung und eines Wurfscheibenschutzes der Verteilerscheiben an dem Rahmen anzulenken, wobei die sich seitlich nach außen erstreckenden Hebelarme des Hebelgestänges eine hohe Standfestigkeit bieten, wenn sie in die Stützposition der verstellbaren Stützelemente verschwenkt worden sind.

Während die Stützelemente des erfindungsgemäßen landwirtschaftliches Anbaugerät grundsätzlich in beliebiger bekannter Weise und z.B. nach Art von Stützfüßen ausgestaltet sein können, ist aus den eingangs genannten Gründen in vorteilhafter Ausgestaltung vorgesehen, dass die Stützelemente von Stützrollen gebildet sind, wie sie beispielsweise als solches aus der eingangs erwähnten DE 20 2023 103 588 U1 bekannt sind.

Was die in Form von Stützrollen ausgestalteten, verstellbaren Stützelemente betrifft, so erweist es sich als vorteilhaft, wenn zumindest zwei Stützrollen arretierbar sind, um ein unerwünschtes Fortrollen des Anbaugerätes auf unebenem Boden zu verhindern. Hierbei können grundsätzlich die beiden im Bereich der der Kopplungseinrichtung zugewandten Seite des Rahmens angeordneten, zwischen ihrer Stützposition und ihrer Ruheposition verstellbaren Stützrollen und/oder die starr, d.h. nicht höhenverstellbar, an dem Rahmen gelagerten Stützrollen mit entsprechenden Arretiereinrichtungen ausgestattet sein. Alternativ oder zusätzlich kann es ferner vorteilhaft sein, wenn zumindest die zwei im Bereich der der Kopplungseinrichtung zugewandten Seite des Rahmens angeordneten, zwischen ihrer Stützposition und ihrer Ruheposition verstellbaren Stützrollen fahrtrichtungsveränderbar sind, indem sie insbesondere um eine im Wesentlichen vertikale Achse schwenkbar sind, so dass durch Verschwenken der Stützrollen um die vertikale Achse ihre horizontale Drehachse in beliebige Richtungen in der Horizontalen ausgerichtet werden kann und das Anbaugerät sowohl etwa geradlinig als auch entlang von Kurven mittels der Stützrollen bewegt werden kann.

Gemäß einer vorteilhaften Weiterbildung kann ferner vorgesehen sein, dass zumindest zwei, insbesondere zumindest den zwei im Bereich der der Kopplungseinrichtung zugewandten Seite des Rahmens angeordneten, zwischen ihrer Stützposition und ihrer Ruheposition verstellbaren, Stützrollen jeweils ein elektrischer Antriebsmotor, insbesondere in Form eines Servomotors, zugeordnet ist, um die Stützrollen in Drehung zu versetzen. In diesem Zusammenhang sei auf die eingangs zitierte DE 20 2023 103 588 U1 verwiesen, welche in Bezug auf die Antriebe der Stützrollen hiermit zum Gegenstand der vorliegenden Offenbarung gemacht wird.

Wie bereits angedeutet, kann das landwirtschaftliche Anbaugerät im Übrigen insbesondere, wenngleich nicht notwendigerweise, von einer landwirtschaftlichen Verteilmaschine zum Ausbringen von pulver- bzw. partikelförmigem Verteilgut, wie Dünger, Saatgut etc., und/oder von flüssigem Verteilgut, wie Pflanzenschutzmitteln, Flüssigdünger etc., gebildet sein, wie beispielsweise in Form eines Zentrifugalstreuers, einer Sämaschine, einer pneumatischen Verteilmaschine, z.B. in Form eines Pneumatikstreuers, einer Sämaschine, einer Drillmaschine etc., einer Feldspritze oder dergleichen, gebildet sein.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht eines landwirtschaftlichen Anbaugerätes in Form eines Zentrifugalstreuers von schräg vorne betrachtet, dessen Rahmen mit Stützelementen in Form von Stützrollen ausgestattet ist, wobei sich die verstellbaren Stützrollen in ihrer Ruheposition befinden;
- Fig. 2: eine im Wesentlichen der Fig. 1 entsprechende schematische perspektivische Detailansicht des landwirtschaftlichen Anbaugerätes gemäß Fig. 1 im Bereich je einer verstellbaren Stützrolle und einer starr angeordneten Stützrolle, wobei sich die verstellbare Stützrolle in ihrer Ruheposition entsprechend der Fig. 1 befindet;
- Fig. 3: eine schematische Seitenansicht des landwirtschaftlichen Anbaugerätes gemäß den Fig. 1 und 2, wobei sich die verstellbaren Stützrollen in ihrer Ruheposition entsprechend den Fig. 1 bis 3 befinden;
- Fig. 4: eine im Wesentlichen der Fig. 3 entsprechende schematische Detailansicht des landwirtschaftlichen Anbaugerätes gemäß den Fig. 1 bis 3 im Be-Bereich je einer verstellbaren Stützrolle und einer starr angeordneten Stützrolle, wobei sich die verstellbare Stützrolle in ihrer Stützposition befindet;
- Fig. 5: eine schematische perspektivische Detailansicht eines eine verstellbare Stützrolle tragenden Hebelgestänges des landwirtschaftlichen Anbaugerätes gemäß den Fig. 1 bis 4, wobei sich die Stützrolle in ihrer Ruheposition befindet;
- Fig. 6: eine der Fig. 5 entsprechende perspektivische Detailansicht des die verstellbare Stützrolle tragenden Hebelgestänges, wobei sich die Stützrolle in ihrer Stützposition befindet;
- Fig. 7: eine der Fig. 5 entsprechende Ansicht des in der Ruheposition der Stützrolle befindlichen Hebelgestänges mit transparent dargestelltem oberen und unteren Hebelarm zur Veranschaulichung des Führungsarms;
- Fig. 8: eine der Fig. 6 entsprechende Ansicht des in der Stützposition der Stützrolle befindlichen Hebelgestänges mit transparent dargestelltem oberen und unteren Hebelarm zur Veranschaulichung des Führungsarms; und
- Fig. 9: eine im Wesentlichen der Fig. 8 entsprechende Ansicht des die Stützrolle tragenden Hebelgestänges, nachdem eine mechanische Verriegelung des Hebelgestänges in der Stützposition der Fig. 8 entriegelt worden ist.

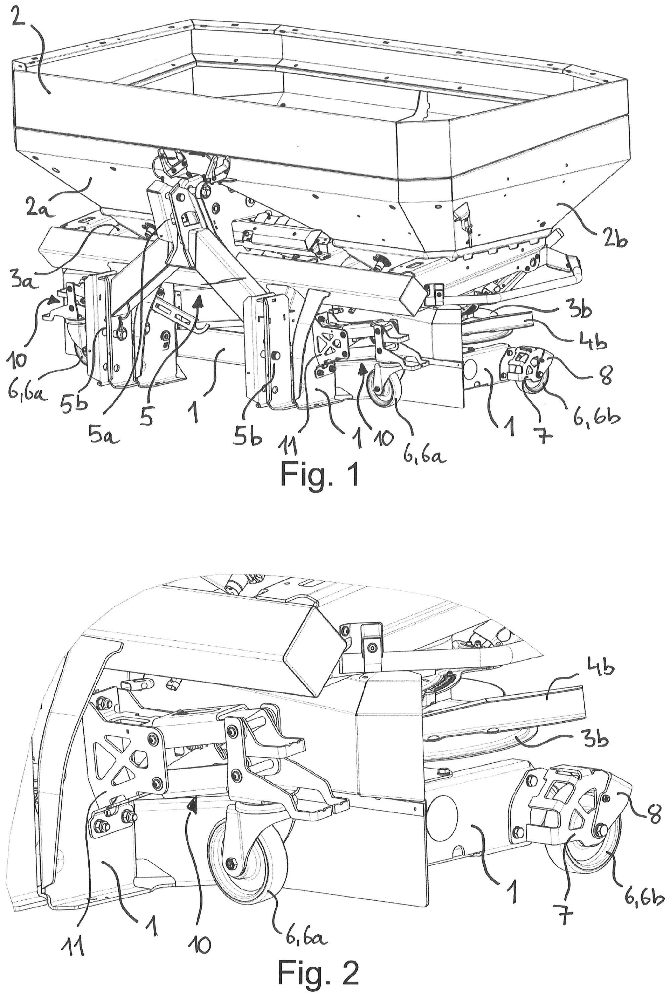

Das in den Fig. 1 bis 4 wiedergegebene landwirtschaftliche Anbaugerät - hier: in Form einer landwirtschaftlichen Verteilmaschine oder genauer in Form eines Zentrifugalstreuers - weist einen von einem Rahmen 1 getragenen Vorratsbehälter 2 auf, welcher im vorliegenden Fall zur Bevorratung von pulver- bzw. partikelförmigem Verteilgut, wie insbesondere Dünger oder Saatgut, dient. Der Vorratsbehälter 2 umfasst bei dem zeichnerisch dargestellten Ausführungsbeispiel zwei sich etwa trichterförmig nach unten verjüngende Behälterteile 2a, 2b, welche an ihrem unteren Ende jeweils eine in den Zeichnungen nicht erkennbare Auslauföffnung aufweisen. Unmittelbar unterhalb einer jeweiligen Auslauföffnung eines jeweiligen Behälterteils 2a, 2b befindet sich je ein in den Zeichnungen gleichfalls nicht im Einzelnen erkennbares Dosierorgan, welches als solches aus dem Stand der Technik bekannt ist und z.B. jeweils einen mit einer jeweiligen Auslauföffnung zusammenwirkenden Dosierschieber umfasst, wobei die Dosierschieber der beiden Dosierorgane vorzugsweise mittels einer Steuereinrichtung des Anbaugerätes unabhängig voneinander steuer- bzw. regelbar sind, um einen der jeweiligen Soll-Verteilmenge entsprechenden Massenstrom an Verteilgut einstellen zu können. Wiederum unterhalb eines jeweiligen Dosierorgans ist je eine Verteilerscheibe 3a, 3b um je eine etwa vertikale Achse drehbar gelagert, wobei die Verteilerscheiben 3a, 3b in üblicher Weise mit Wurfschaufeln 4b bestückt sind. Die Verteilerscheiben 3a, 3b sind mittels geeigneter Antriebe gegensinnig drehangetrieben, wobei es sich bei den Antrieben beispielsweise um, vorzugsweise unabhängig voneinander drehzahlsteuerbare, Elektro- oder Hydraulikmotoren (nicht gezeigt) handeln kann. Alternativ können die Verteilerscheiben 3a, 3b beispielsweise auch über eine gemeinsame Antriebswelle mit der Zapfwelle einer Zugmaschine, wie eines Traktors (nicht gezeigt), koppelbar und durch diese drehangetrieben sein. Wie insbesondere aus der Fig. 1, 3 und 4 ersichtlich, umfasst der Rahmen 1 des landwirtschaftlichen Anbaugerätes ferner eine Kopplungseinrichtung 5, welche zur Kopplung mit einer hierzu komplementären Kopplungsvorrichtung in Form eines genormten Dreipunkt-Krafthebers (nicht gezeigt) einer Zugmaschine, wie eines Traktors, ausgebildet ist, um das landwirtschaftliche Anbaugerät während seines Betriebs mittels der Zugmaschine tragen zu können. Die Kopplungseinrichtung 5 weist in als solcher bekannter Weise beispielsweise einen oberen Kopplungspunkt 5a zur Verbindung mit dem Oberlenker des Dreipunkt-Krafthebers sowie zwei untere Kopplungspunkte 5b zur Verbindung mit den Unterlenkern des Dreipunkt-Krafthebers auf.

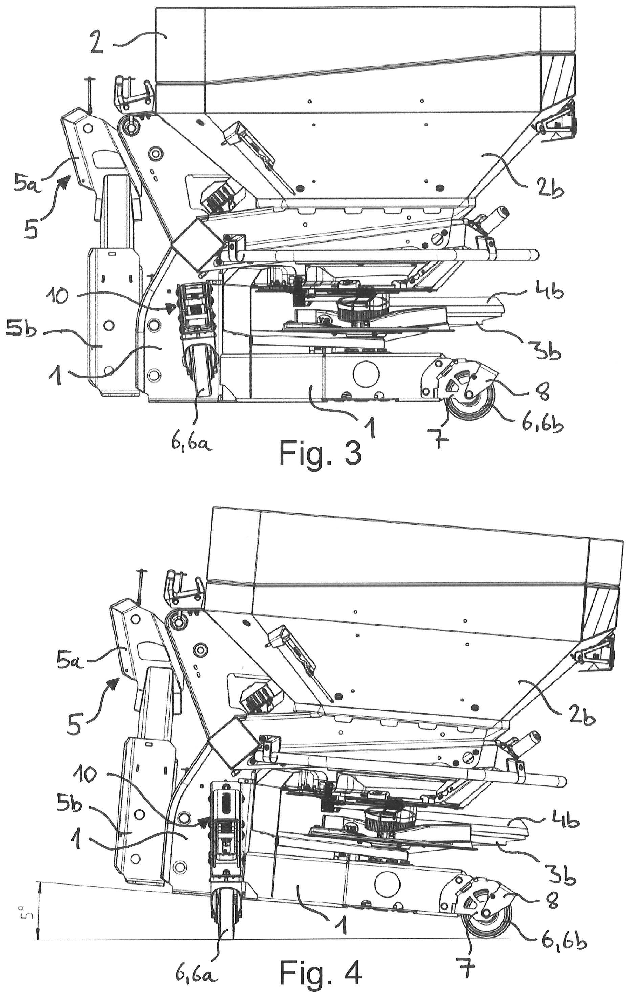

Wie des Weiteren den Fig. 1 bis 4 zu entnehmen ist, sind an der Unterseite des Rahmens 1 eine Mehrzahl an - hier: vier - Stützelementen montiert, welche im vorliegenden Fall von Stützrollen 6 gebildet sind und z.B. im Bereich der Ecken des Rahmens 1 angeordnet und zur Abstützung des Anbaugerätes auf dem Boden ausgebildet sind, sofern es nicht von dem Dreipunkt-Kraftheber einer Zugmaschine aufgenommen ist. Die beiden - in Fahrtrichtung betrachtet - hinteren, im Bereich der der Kopplungseinrichtung 5 entgegengesetzten Seite des Anbaugerätes angeordneten Stützrollen 6b (in den Fig. 3 und 4 rechts) sind bei dem zeichnerisch wiedergegebenen Ausführungsbeispiel beispielsweise starr, d.h. nicht höhenverstellbar, an dem Rahmen 1 des Anbaugerätes im Bereich der beiden rückwärtigen Ecken angeordnet, wobei ihre sich senkrecht zur Fahrtrichtung erstreckende Drehachse beispielsweise mittels je eines Lagerbocks 7 an dem Rahmen 1 festgelegt ist. Die beiden hinteren Stützrollen 6b sind ferner mit je einer Arretiereinrichtung 8 versehen, welche z.B. einen koaxial zu der Drehachse einer jeweiligen Stützrolle 6b schwenkbaren Arretierbügel umfasst.

Die beiden - in Fahrtrichtung betrachtet - vorderen, im Bereich der der Kopplungseinrichtung 5 zugewandten Seite des Anbaugerätes angeordneten Stützrollen 6a (in den Fig. 3 und 4 links) sind hingegen höhenverstellbar an dem Rahmen 1 des Anbaugerätes gelagert, wobei die vorderen Stützrollen 6a derart zwischen einer Stützposition (vgl. die Fig. 4), in welcher sie nach unten abgesenkt sind und das Anbaugerät auf dem Boden abstützen, und einer Ruheposition (vgl. die Fig. 1 bis 3), in welcher sie nach oben angehoben sind und nicht mit dem Boden in Kontakt treten, verstellbar sind. Sind die in Form der (vorderen) Stützrollen 6, 6a ausgestalteten verstellbaren Stützelemente in ihre Stützposition gemäß der Fig. 4 überführt worden, so befindet sich der Rahmen 1 des Anbaugerätes in einer Schrägstellung bezüglich der Horizontalen derart, dass seine der Kopplungseinrichtung 5 zugewandte (vordere, in der Fig. 4 linke) Seite gegenüber seiner der Kopplungseinrichtung 5 entgegengesetzten (hinteren, in der Fig. 4 rechten) Seite angehoben ist, um für eine verbesserte Zugänglichkeit der Kopplungseinrichtung 5 zu sorgen, insbesondere dann, wenn das Anbaugerät von einer Zugmaschine aufgenommen werden soll. Bei dem zeichnerisch wiedergegebenen Ausführungsbeispiel sorgen die in ihre Stützposition überführten verstellbaren Stützrollen 6, 6a für eine Schrägstellung des Anbaugerätes von etwa 5°. Die verstellbaren Stützrollen 6, 6a können ferner fahrtrichtungsveränderbar gelagert sein, indem sie um eine im Wesentlichen vertikale, in Bezug auf Ihre Drehachse senkrechte Achse verschwenkbar sind. Darüber hinaus können einigen oder allen Stützrollen 6, 6a motorische Antriebe, wie z.B. in Form von Elektromotoren (nicht gezeigt), zugeordnet sein, wie sie beispielsweise als solche aus der DE 20 2023 103 588 U1 bekannt sind.

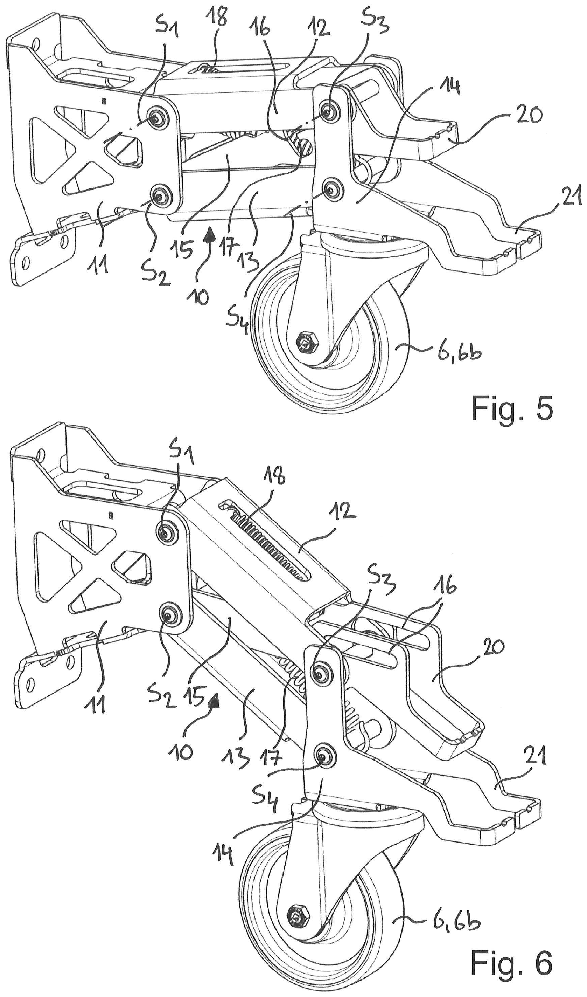

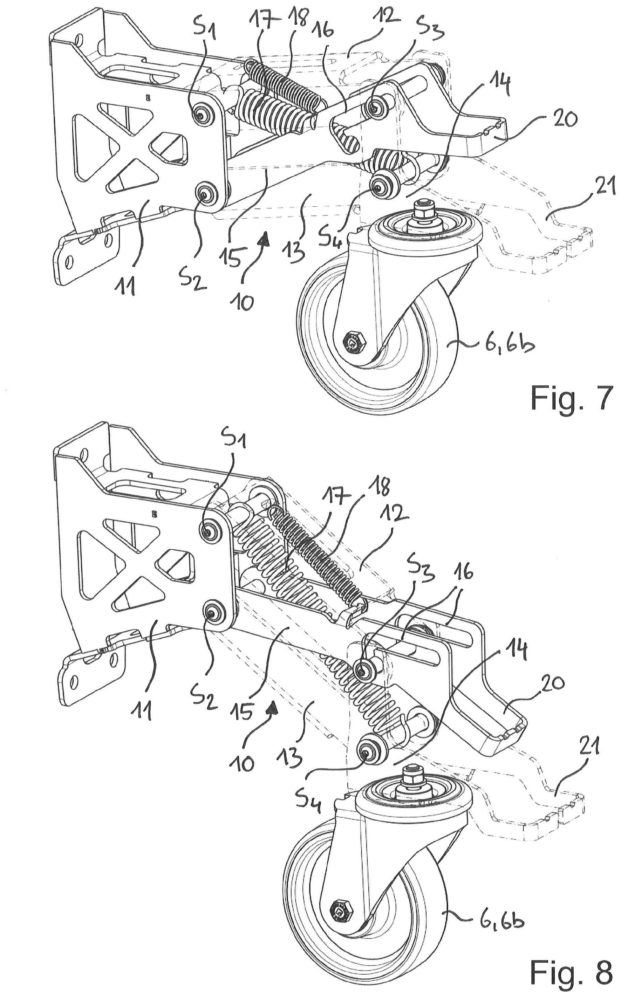

Wie insbesondere auch aus den Fig. 5 bis 9 ersichtlich, sind die in Form der Stützrollen 6, 6a ausgestalteten verstellbaren Stützelemente des Anbaugerätes mittels je eines Hebelgestänges 10 zwischen ihrer Ruheposition der Fig. 1 bis 3 (vgl. auch die Fig. 5 und 7) und ihrer Stützposition der Fig. 4 (vgl. auch die Fig. 6 und 8) verschwenkbar, wobei ein jeweiliges Hebelgestänge 10 an einer Lagerkonsole 11 angelenkt ist, welche im Bereich der der Kopplungseinrichtung 5 zugewandten Seite des Rahmens 1 seitlich an dem Rahmen 1 befestigt ist. Das Hebelgestänge 10 umfasst einerseits einen oberen Hebelarm 12, welcher an seinem einen, dem Rahmen 1 nahen Ende um eine erste horizontale Schwenkachse S₁ mittels der Lagerkonsole 11 an dem Rahmen 1 schwenkbar gelagert ist. Andererseits umfasst das Hebelgestänge 10 einen unteren Hebelarm aufweist, welcher an seinem einen, dem Rahmen 1 nahen Ende um eine zweite horizontale, zu der ersten Schwenkachse S₁ parallele Schwenkachse S₂ mittels der Lagerkonsole 11 an dem Rahmen 1 schwenkbar gelagert ist. Die ersten und zweiten Schwenkachsen S₁, S₂ sind dabei im vorliegenden Fall etwa senkrecht übereinander angeordnet. Darüber hinaus umfasst das Hebelgestänge 10 eine ein jeweiliges Stützelement in Form einer jeweiligen verstellbaren Stützrolle 6b tragende Konsole 14, welche einerseits um eine dritte horizontale Schwenkachse S₃ an dem anderen, dem Rahmen 1 fernen Ende des oberen Hebelarms 12 schwenkbar gelagert ist, und welche andererseits um eine vierte horizontale und zu der dritten Schwenkachse S₃ parallele Schwenkachse S₄ an dem anderen, dem Rahmen 1 fernen Ende des unteren Hebelarms 13 schwenkbar gelagert ist. Dabei sind im vorliegenden Fall alle vier Schwenkachsen S₁, S₂, S₃, S₄ sowohl parallel zueinander als auch im Wesentlichen parallel zur Fahrtrichtung des Anbaugerätes angeordnet, so dass sich das Hebelgestänge 10 mit seinem oberen Hebelarm 12 und seinem unteren Hebelarm 13 in Bezug auf den Rahmen 10 seitlich nach außen erstreckt und dem Anbaugerät eine bestmögliche Standfestigkeit verleiht, wenn sich das Hebelgestänge in der Stützposition der verstellbaren Stützrollen 6b befindet (vgl. die Fig. 5 und 7).

Das Hebegestänge 10 umfasst zusätzlich zu dem oberen 12 und unteren Hebelarm 13 sowie der Konsole 14 einen Führungsarm 15, welcher am besten in den Fig. 7 bis 9 erkennbar ist, in welchen die Hebelarme 12, 13, die ihn ansonsten teilweise verdecken (vgl. die Fig. 5 und 6), transparent angedeutet sind. Der Führungsarm 15 erstreckt sich schräg zwischen dem oberen Hebelarm 12 und dem unteren Hebelarm 13, wobei er an seinem einen, dem Rahmen 1 nahen Ende um die zweite Schwenkachse S₂ des unteren Hebelarms 13, aber unabhängig von diesem mittels der Lagerkonsole 11 an dem Rahmen 1 schwenkbar gelagert ist, und welcher an seinem anderen, dem Rahmen 1 fernen Ende ein Führungslangloch 16 aufweist, welches von der dritten Schwenkachse S₃ des oberen Hebelarms 12 durchsetzt ist und entlang welchem die dritte Schwenkachse S₃ verlagerbar ist, wenn das Hebelgestänge 10 zwischen der Ruheposition und der Stützposition der jeweiligen verstellbaren Stützrolle 6b verschwenkt wird. Das Führungslangloch 16 des Führungsarms 15 umfasst einerseits einen äußeren geradlinigen Abschnitt, welcher sich etwa parallel zur Erstreckungsrichtung des Führungsarms 15 selbst erstreckt und welches mit seinem inneren und äußeren Ende die Endpositionen des Hebelgestänges 10 einerseits in der Ruheposition der Stützrolle 6b (die dritte Schwenkachse S₃ des oberen Hebelarms 12 stößt an das äußere Ende des Führungslangloches 16 des Führungsarms 15 an; vgl. die Fig. 5 und 7) und andererseits in der Stützposition der Stützrolle 6b (die dritte Schwenkachse S₃ des oberen Hebelarms 12 befindet sich am inneren Ende des Führungslangloches 16 des Führungsarms 15; vgl. die Fig. 6 und 8) vorgibt.

Um das Hebelgestänge 10 in der Ruheposition der verstellbaren Stützrolle 6b zu halten, ist es bei dem zeichnerisch wiedergegebenen Ausführungsbeispiel in Richtung der Ruheposition elastisch vorbelastet, was beispielsweise dadurch geschehen kann, indem zwischen der ersten Schwenkachse S₁ des oberen Hebelarms 12 und der vierten Schwenkachse S₄ des unteren Hebelarms 13 des Hebelgestänges 10 eine erste Feder 17 - hier in Form einer Schraubenfeder - wirksam ist, wobei die erste Feder 17 in der (angehobenen) Ruheposition des Hebelgestänges 10 (vgl. die Fig. 5 und 7) verkürzt und in der (abgesenkten) Stützposition des Hebelgestänges 10 (vgl. die Fig. 6 und 8) gedehnt ist.

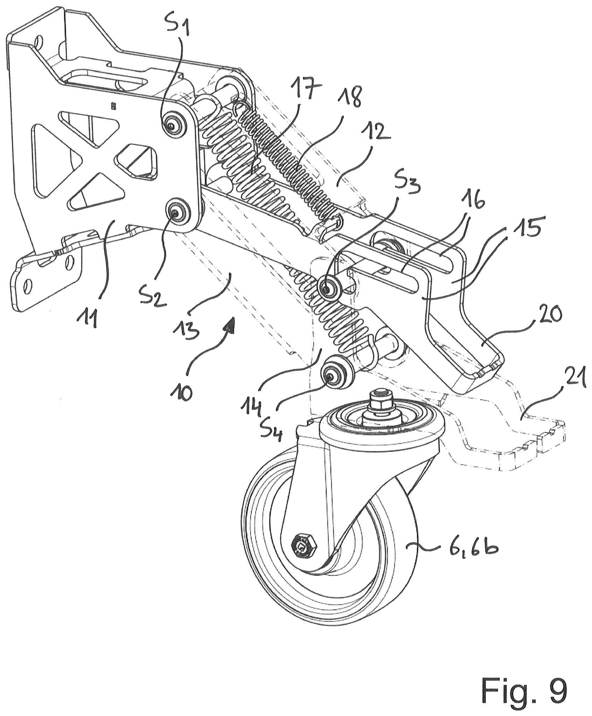

An seinem inneren Ende umfasst das Führungslangloch 16 des Führungsarms 15 im vorliegenden Fall ferner einen zu seinem geradlinigen Abschnitt etwa senkrecht abgewinkelten, im Wesentlichen L-förmigen Abschnitt, welcher zur mechanischen Verriegelung des Hebelgestänges 10 in der Stützposition der verstellbaren Stützrolle 6b zu dienen vermag, indem die dritte Schwenkachse S₃ des oberen Hebelarms 12 in der Stützposition mit dem L-förmigen Abschnitt des Führungslangloches 16 des Führungsarms 15 in Eingriff bringbar ist (vgl. insbesondere die Fig. 6 und 8), so dass das Hebelgestänge 10 in der Stützposition der verstellbaren Stützrolle 6b mechanisch arretiert ist. Um ein unbeabsichtigtes Herausrutschen der in der Stützposition mit dem abgewinkelten L-förmigen Abschnitt des Führungslangloches 16 im Eingriff stehenden dritten Schwenkachse S₃ des oberen Hebelarms 12 aus dem L-förmigen Abschnitt des Führungslangloches 16 zu verhindern, ist zwischen der ersten Schwenkachse S₁ des oberen Hebelarms 12 und dem Führungsarm 15 eine zweite Feder 18 - hier wiederum in Form eines Schraubenfeder - wirksam, so dass die dritte Schwenkachse S₃ in Eingriff mit dem L-förmigen Abschnitt des Führungslangloches 16 des Führungsarms 15 gedrängt wird, wenn sich das Hebelgestänge 10 in der Stützposition der verstellbaren Stützrolle 6b befindet (vgl. die Fig. 6 und 8). Zum Vergleich zeigt die Fig. 9 eine Stellung des Hebelgestänges 10, in welcher die dritte Schwenkachse S₃ des oberen Hebelarms 12 entgegen der elastischen Vorbelastung mittels der zweiten Feder 18 gerade mit dem abgewinkelten L-förmigen Abschnitt des Führungslangloches 16 des Führungsarms 15 außer Eingriff gebracht worden ist, um es in die Ruheposition (vgl. die Fig. 5 und 7) zu verschwenken.

Um das Hebelgestänge 10 in einfacher und bequemer Weise zwischen der Ruheposition und der Stützposition der verstellbaren Stützrolle 6b hin und her zu verschwenken, umfasst das Hebelgestänge 10 einerseits ein erstes Betätigungselement 20, um es durch Betätigen des ersten Betätigungselementes 20 von der Ruheposition (Fig. 5 und 7) in die Stützposition (Fig. 6 und 8) des verstellbaren Stützelementes 6b zu überführen, andererseits ein zweites Betätigungselement 21, um es durch Betätigen des zweiten Betätigungselementes zu entriegeln (vgl. die Fig. 9) und von der Stützposition (Fig. 6 und 8) in die Ruheposition (Fig, 5 und 7) des verstellbaren Stützelementes 6b zu überführen. Sowohl das erste Betätigungselement 20 als auch das zweite Betätigungselement 21 sind im vorliegenden Fall in Form von Fußgriffen ausgestaltet, welche der Benutzer lediglich mit dem Fuß nach unten drücken muss, um das Hebelgestänge 10 zwischen der Stütz- und der Ruheposition zu verschwenken.

Das erste Betätigungselement 20 des Hebelgestänges 10 ist in Form eines Fortsatzes des freien Endes des Führungsarms 15 des Hebelgestänge 10 gebildet, welcher sich weitgehend parallel zu dem oberen Hebelarm 12, dem unteren Hebelarm 13 und dem Führungsarm 15 erstreckt. Befindet sich das Hebelgestänge 10 in der (angehobenen) Ruheposition der verstellbaren Stützrolle 6b (vgl. die Fig. 5 und 7), so wird durch Herabdrücken des ersten Betätigungselementes 20 nach unten das freie Ende des Führungsarms 15 entgegen der durch die erste Feder 17 bewirkte Federkraft um die zweiten Schwenkachse S₂ nach unten verschwenkt. Die dritte Schwenkachse S₃ des oberen Hebelarms 12 gleitet entlang dem Führungslangloch 16 des Führungsarms 15 entlang dessen geradlinigem Abschnitt von außen nach innen, so dass der obere Hebelarm 12 und der untere Hebelarm 13 um die erste Schwenkachse S₁ bzw. um die zweite Schwenkachse S₂ nach unten verschwenkt werden. Erreicht die dritte Schwenkachse S₃ des oberen Hebelarms die in der Fig 9 gezeigte Position, in welcher sie in den abgewinkelten L-förmigen Abschnitt des Führungslangloches verlagert worden ist, sorgt die Federkraft der zweiten Feder 18 für eine Verriegelung des Hebelgestänges in der Stützposition, indem sie den Führungsarm 15 derart elastisch spannt, dass die dritte Schwenkachse S₃ mit dem endständigen L-Schenkel des Führungslangloches 16 in Eingriff gerät (vgl. die Fig. 6 und 8).

Das zweite Betätigungselement 21 des Hebelgestänges 10 ist in Form eines Fortsatzes der eine jeweilige Stützrolle 6b tragenden Konsole 14 gebildet, welcher sich von dem unteren Ende der Konsole 14 mit einer zu dem oberen Hebelarm 12, dem unteren Hebelarm 13 und dem Führungsarm 15 parallelen Erstreckungsrichtungskomponente nach außen erstreckt. Befindet sich das Hebelgestänge 10 in der (abgesenkten) Stützposition der verstellbaren Stützrolle 6b (vgl. die Fig. 6 und 8), so wird durch Herabdrücken des zweiten Betätigungselementes 21 nach unten zunächst die Konsole 14 um einen kleinen Winkel um die vierte Schwenkachse S₄ - mit dem freien Ende des zweiten Betätigungselementes 21 nach unten - verschwenkt, bis in der Situation gemäß der Fig. 9 die dritte Schwenkachse S₃ des oberen Hebelarms 12 entgegen der Federkraft der zweiten Feder 18 mit dem endständigen L-Schenkel des Führungslangloches 16 des Führungsarms 15 außer Eingriff gebracht worden ist. Sodann gleitet die dritte Schwenkachse S₃ des oberen Hebelarms 12 entlang dem Führungslangloch 16 des Führungsarms 15 von innen nach außen, so dass der obere Hebelarm 12 und der untere Hebelarm 13 um die erste Schwenkachse S₁ bzw. um die zweite Schwenkachse S₂ nach oben verschwenkt werden. Erreicht die dritte Schwenkachse S₃ des oberen Hebelarms die in den Fig 6 und 8 wiedergegebene Stützposition, in welcher sie gegen das äußere Ende des geradlinigen Abschnittes des Führungslangloches 16 des Führungsarms 15 anstößt, sorgt die Federkraft der ersten Feder 17 für ein Festhalten des Hebelgestänges 10 in der Ruheposition, indem sie die vierte Schwenkachse S₄ des unteren Hebelarms 13 (gegenüber der Konsole 14) gegen die erste Schwenkachse S₁ des oberen Hebelarms 12 (gegenüber der Lagerkonsole 11) elastisch spannt.

## Patentansprüche

1. Landwirtschaftliches Anbaugerät mit einem Rahmen (1) mit einer Mehrzahl von an dessen Unterseite mit Abstand voneinander angeordneten Stützelementen, welche zur Abstützung des Anbaugerätes auf dem Boden ausgebildet sind, und mit einer Kopplungseinrichtung (5), welche zur Kopplung mit einer hierzu komplementären Kopplungsvorrichtung einer Zugmaschine ausgebildet ist, um das Anbaugerät mit der Zugmaschine zu verbinden, **dadurch gekennzeichnet, dass** zumindest zwei im Bereich der der Kopplungseinrichtung (5) zugewandten Seite des Rahmens (1) angeordnete, verstellbare Stützelemente derart zwischen einer Stützposition und einer Ruheposition verstellbar sind, dass der Rahmen (1) sich in einer Schrägstellung bezüglich der Horizontalen befindet, wenn er von den in ihrer Stützposition befindlichen, verstellbaren Stützelementen abgestützt ist.

2. Landwirtschaftliches Anbaugerät nach Anspruch 1, **dadurch gekennzeichnet, dass** sich die verstellbaren Stützelemente in ihrer Ruheposition außer Kontakt mit dem Boden befinden, wenn das Anbaugerät auf dem Boden abgestellt worden ist.

3. Landwirtschaftliches Anbaugerät nach Anspruch 1 oder 2, **dadurch gekennzeichnet, dass** der Rahmen (1)
- derart in Bezug auf die Horizontale geneigt ist, dass seine der Kopplungseinrichtung (5) zugewandte Seite gegenüber seiner der Kopplungseinrichtung (5) entgegengesetzten Seite angehoben ist, und/oder
- um einen Winkel zwischen 1° und 15°, insbesondere zwischen 1,5° und 12,5°, vorzugsweise zwischen 2° und 10°, in Bezug auf die Horizontale geneigt ist,
wenn der Rahmen (1) von den in ihrer Stützposition befindlichen, verstellbaren Stützelementen abgestützt ist.

4. Landwirtschaftliches Anbaugerät nach einem der Ansprüche 1 bis 3, **dadurch gekennzeichnet, dass** zumindest zwei im Bereich der der Kopplungseinrichtung (5) entgegengesetzten Seite des Rahmens (1) angeordnete Stützelemente starr an dem Rahmen (1) angeordnet sind.

5. Landwirtschaftliches Anbaugerät nach einem der Ansprüche 1 bis 4, **dadurch gekennzeichnet, dass** die zumindest zwei im Bereich der der Kopplungseinrichtung (5) zugewandten Seite des Rahmens (1) angeordneten, verstellbaren Stützelemente zwischen ihrer Stützposition und ihrer Ruheposition verschwenkbar sind.

6. Landwirtschaftliches Anbaugerät nach einem der Ansprüche 1 bis 5, **dadurch gekennzeichnet, dass** die zumindest zwei im Bereich der der Kopplungseinrichtung (5) zugewandten Seite des Rahmens (1) angeordneten, verstellbaren Stützelemente mittels je eines Hebelgestänges (10) zwischen ihrer Stützposition und ihrer Ruheposition verschwenkbar sind.

7. Landwirtschaftliches Anbaugerät nach Anspruch 6, **dadurch gekennzeichnet, dass** das Hebelgestänge (10)
- in Richtung der Ruheposition des jeweiligen verstellbaren Stützelementes mechanisch, insbesondere elastisch, vorbelastet ist, um das jeweilige Stützelement in seiner Ruheposition zu halten, und/oder
- ein erstes Betätigungselement (20) aufweist, um das Hebelgestänge (10) durch Betätigen des ersten Betätigungselementes (20) von der Ruheposition in die Stützposition des jeweiligen verstellbaren Stützelementes zu überführen.

8. Landwirtschaftliches Anbaugerät nach Anspruch 6 oder 7, **dadurch gekennzeichnet, dass** das Hebelgestänge (10) eine mechanische Verriegelung aufweist, um das jeweilige Stützelement in seiner Stützposition mechanisch zu arretieren, wobei das Hebelgestänge (20) insbesondere ein zweites Betätigungselement (21) aufweist, um das Hebelgestänge (10) durch Betätigen des zweiten Betätigungselementes (21) zu entriegeln und von der Stützposition in die Ruheposition des jeweiligen verstellbaren Stützelementes zu überführen.

9. Landwirtschaftliches Anbaugerät nach einem der Ansprüche 6 bis 8, **dadurch gekennzeichnet, dass** das Hebelgestänge (10) entlang einer Führung zwischen der Ruheposition und der Stützposition des jeweiligen verstellbaren Stützelementes verschwenkbar ist.

10. Landwirtschaftliches Anbaugerät nach einem der Ansprüche 6 bis 9, **dadurch gekennzeichnet, dass** das Hebelgestänge (10)
- einen oberen Hebelarm (12) aufweist, welcher an seinem einen, dem Rahmen (1) nahen Ende um eine erste, im Wesentlichen horizontale Schwenkachse (S₁) an dem Rahmen (1) des Anbaugerätes schwenkbar gelagert ist;
- einen unteren Hebelarm (13) aufweist, welcher an seinem einen, dem Rahmen (1) nahen Ende um eine zweite, im Wesentlichen horizontale und zu der ersten Schwenkachse (S₁) parallele Schwenkachse (S₂) an dem Rahmen (1) des Anbaugerätes schwenkbar gelagert ist;
- eine ein jeweiliges Stützelement tragende Konsole (14) aufweist, welche einerseits um eine dritte, im Wesentlichen horizontale Schwenkachse (S₃) an dem anderen, dem Rahmen (1) fernen Ende des oberen Hebelarms (12) schwenkbar gelagert ist, und welche andererseits um eine vierte, im Wesentlichen horizontale und zu der dritten Schwenkachse (S₃) parallele Schwenkachse (S₄) an dem anderen, dem Rahmen (1) fernen Ende des unteren Hebelarms (13) schwenkbar gelagert ist; und
- einen Führungsarm (15) aufweist, welcher an seinem einen, dem Rahmen (1) nahen Ende seinerseits um die zweite Schwenkachse (S₂) des unteren Hebelarms (13), aber unabhängig von diesem, an dem Rahmen (1) des Anbaugerätes schwenkbar gelagert ist, und welcher an seinem anderen, dem Rahmen (1) fernen Ende ein Führungslangloch (16) aufweist, welches von der dritten Schwenkachse (S₃) des oberen Hebelarms (12) durchsetzt ist und entlang welchem die dritte Schwenkachse (S₁) verlagerbar ist, wenn das Hebelgestänge (10) zwischen der Ruheposition und der Stützposition des jeweiligen verstellbaren Stützelementes verschwenkt wird.

11. Landwirtschaftliches Anbaugerät nach Anspruch 10, **dadurch gekennzeichnet, dass** ein jeweiliges verstellbares Stützelement dadurch mechanisch in seine Ruheposition vorbelastet ist, indem zwischen der ersten Schwenkachse (S₁) des oberen Hebelarms (12) und der vierten Schwenkachse (S₄) des unteren Hebelarms (13) des Hebelgestänges (10) wenigstens eine erste Feder (17) wirksam ist.

12. Landwirtschaftliches Anbaugerät nach Anspruch 10 oder 11, **dadurch gekennzeichnet, dass** die mechanische Verriegelung eines jeweiligen verstellbaren Stützelementes in seiner Stützposition ein abgewinkeltes Ende des Führungslangloches (16) des Führungsarms (15) des Hebelgestänges (10) umfasst, in welches die dritte Schwenkachse (S₃) des oberen Hebelarms (12) in Eingriff bringbar ist, wobei die mechanische Verriegelung eines jeweiligen verstellbaren Stützelementes in seiner Stützposition ferner insbesondere wenigstens eine zwischen der ersten Schwenkachse (S₁) des oberen Hebelarms (12) und dem Führungsarm (15) wirksame zweite Feder (18) umfasst.

13. Landwirtschaftliches Anbaugerät nach einem der Ansprüche 6 bis 12, **dadurch gekennzeichnet, dass**
- das erste Betätigungselement (20) des Hebelgestänges (10) einen, insbesondere nach Art eines ersten Fußgriffes ausgestalteten, Fortsatz des freien Endes des Führungsarms (15) des Hebelgestänge (10) umfasst, wobei sich der Fortsatz des Führungsarms (15) mit einer zu dem oberen Hebelarm (12), dem unteren Hebelarm (13) und dem Führungsarm (15) parallelen Erstreckungsrichtungskomponente erstreckt, und/oder
- das zweite Betätigungselement (21) des Hebelgestänges (10) einen, insbesondere nach Art eines zweiten Fußgriffes ausgestalteten, Fortsatz der ein jeweiliges Stützelement tragenden Konsole (14) umfasst, wobei sich der Fortsatz der Konsole (14) von dem unteren Ende der Konsole (14) mit einer zu dem oberen Hebelarm (12), dem unteren Hebelarm (13) und dem Führungsarm (15) parallelen Erstreckungsrichtungskomponente erstreckt.

14. Landwirtschaftliches Anbaugerät nach einem der Ansprüche 6 bis 13, **dadurch gekennzeichnet, dass** die Schwenkachsen (S₁, S₂, S₃, S₄) eines jeweiligen Hebelgestänges (10) im Wesentlichen parallel zur Fahrtrichtung des Anbaugerätes angeordnet sind.

15. Landwirtschaftliches Anbaugerät nach einem der Ansprüche 1 bis 14, **dadurch gekennzeichnet, dass** die Stützelemente von Stützrollen (6) gebildet sind, wobei insbesondere zumindest zwei Stützrollen (6)
- arretierbar sind und/oder fahrtrichtungsveränderbar sind, indem sie insbesondere um eine im Wesentlichen vertikale Achse schwenkbar sind, und/oder
- jeweils ein elektrischer Antriebsmotor, insbesondere in Form eines Servomotors, zugeordnet ist, um die Stützrollen (6) in Drehung zu versetzen.
